# EUROPÄISCHE PATENTANMELDUNG

(11) **EP 1 742 325 A1**
(43) Veröffentlichungstag der Anmeldung: **10.01.2007**
(21) Anmeldenummer: 06123062.9
(22) Anmeldetag: 30.06.2001
(51) Int. Cl.: H02J 7/32, H02J 9/06

(54) **Notstromversorgungseinrichtung**

(30) Priorität: 07.07.2000 DE 10033029
(62) Teilanmeldung aus: 01962807.2
(71) Anmelder: Wobben, Aloys, 26607 Aurich (DE)
(72) Erfinder: Wobben, Aloys, 26607 Aurich (DE)
(74) Vertreter: Eisenführ, Speiser & Partner

(57) **Zusammenfassung**

Es ist bekannt, bei Windenergieanlagen für bestimmte Teile eine Notstromversorgung mittels Akkumulatoren, insbesondere Blei-Akkumulatoren vorzusehen, damit für den Fall eines Stromausfalls die Windenergieanlage so in Position gebracht werden kann, dass keine Schäden an der Windenergieanlage eintreten.

Der Nachteil von Blei-Akkumulatoren liegt aber darin, dass sie relativ schwer sind, sehr viel Platz benötigen und dass Blei-Akkumulatoren nicht unbegrenzt oft auf- und entladen werden können. Auch nehmen die Auflade- und Entladeeigenschaften der Blei-Akkumulatoren mit der Zeit ab, und außerdem benötigen Akkumulatorenspeicher eine relativ aufwendige Wartung, so dass sie die Kosten einer Windenergieanlage bzw. deren Betrieb erhöhen.

Aufgabe der Erfindung ist es, die vorgenannten Nachteile zu vermeiden.

Verwendung eines Kondensatorspeichers als Speicher für elektrische Energie anstelle eines Akkumulators in einer Windenergienanlage.

## Beschreibung

Es ist bekannt, bei Windenergieanlagen für bestimmte Teile eine Notstromversorgung mittels Akkumulatoren, insbesondere Blei-Akkumulatoren vorzusehen, damit für den Fall eines Stromausfalls die Windenergieanlage so in Position gebracht werden kann, dass keine Schäden an der Windenergieanlage eintreten. Blei-Akkumulatoren werden beispielsweise für die Notstromversorgung der Blattverstellung verwendet, so dass für den Fall eines Stromausfalls (z.B. durch einen Kurzschluss im Versorgungssystem) die Blätter der Windenergieanlage so verstellt werden können, dass der gesamte Windenergieanlagen-Rotor zum Stillstand gebracht wird und keinen wesentlichen Antrieb aus der Windenergie mehr erfährt. Auch kann es notwendig sein, die Windenergieanlagen-Gondel "aus dem Wind" zu drehen, wozu ebenfalls Blei-Akkumulatoren als Notstromversorgungseinrichtung verwendet werden können.

Der Nachteil von Blei-Akkumulatoren liegt aber darin, dass sie relativ schwer sind, sehr viel Platz benötigen und dass Blei-Akkumulatoren nicht unbegrenzt oft auf- und entladen werden können. Auch nehmen die Auflade- und Entladeeigenschaften der Blei-Akkumulatoren mit der Zeit ab, und außerdem benötigen Akkumulatorenspeicher eine relativ aufwendige Wartung, so dass sie die Kosten einer Windenergieanlage bzw. deren Betrieb erhöhen.

Aus Elektrizitätswirtschaft, Jg. 1994 (1995), Heft 14, Seiten 842 bis 845 sind verschiedene Stromspeicher für die Energieversorgung bekannt. Hierbei werden auch elektrische Speicher vorgestellt, die in Kraftwerken, abgesehen von ihrer Funktion als Notstromversorgung für den Lastausgleich und die Bereitstellung von Sekundenreserven eingesetzt werden, womit die Ausnutzungsdauer der Energieerzeugungsanlagen verbessert wird. Erwähnt werden in diesem Zusammenhang auch Doppelschichtkondensatoren.

Aus DE 196 51 364 A1 ist eine Vorrichtung zur Verbesserung der Netzverträglichkeit von Windkraftanlagen mit Asynchrongeneratoren bekannt, wobei dem öffentlichen Versorgungsnetz dabei eine elektronisch gesteuerte Einrichtung parallel geschaltet ist, die einen Energie-Zwischenspeicher beinhaltet, wobei als eine Möglichkeit des Zwischenspeichers auch eine Kapazität erwähnt ist.

Aufgabe der Erfindung ist es, die vorgenannten Nachteile zu vermeiden.

Die Aufgabe wird durch die Erfindung mit den Merkmalen nach Anspruch 1 gelöst. Vorteilhafte Weiterbildungen sind in den Unteransprüchen beschrieben.

Die Erfindung schlägt im Wesentlichen vor, statt eines Akkumulators nunmehr einen Kondensator, insbesondere einen Kondensator vom "UltraCap"-Typ, für verschiedene Anwendungen bei einer Windenergieanlage einzusetzen.

Der besondere Vorteil von Kondensatoren liegt in der Wartungsfreiheit und der unbegrenzten Menge an Lade- und Entladungsvorgängen im Gegensatz zu herkömmlichen Akkumulatoren bzw. Batterien.

Besonders vorteilhaft geeignet ist ein Kondensator, wie er von der Firma Siemens Matsushita Components GmbH Co. KG unter der Bezeichnung "UltraCap" sowie der Artikel-Nr. B48710-A0283-Q035 hergestellt wird. Dieser Kondensator verfügt über folgende technische Daten:

| | |
|---|---|
| (Nenn-)Kapazität CR (DCC⁽¹⁾, 25°C): | 2,8 F |
| Kapazitätstoleranz: | -10...+30% |
| (Nenn-)Spannung UR | 75 V |
| Leistung⁽²⁾ | 578 W/kg 756 W/l |
| Max. Lade-/Entladestrom I_{c} (25°C) | 25 A |
| Gespeicherte Energie (bei U_{R}) | 7875 J |
| Spezifische Energie (bei U_{R} | 1,09 Wh/kg 1,43 Wh/l |
| Stoß-Spannung | 88 V |
| Max. Leckstrom I_{Lc} (12h, 25°C) | 4 mA |
| Max. Serienwiderstand ESR^{DC}(DCC, 25°C) | 800 mΩ |
| Max. Serienwiderstand ESR^{HF}(1kHz, 25°C) | 480 mΩ |
| Gewicht | 2 kg |
| Volumen | 1,5 |
| Betriebstemperatur | -25...+65 °C |
| Speichertemperatur | -35...+65 °C |
| Lebensdauer (25°C, UR) | 180000 h |
| Höhe x Breite x Länge | 70 x 70 x 312 mm |

| | |
|---|---|
| (1) DCC: Entladung mit konstantem Strom (2) Entladung von UR nach UR/2 mit IC=25A | |

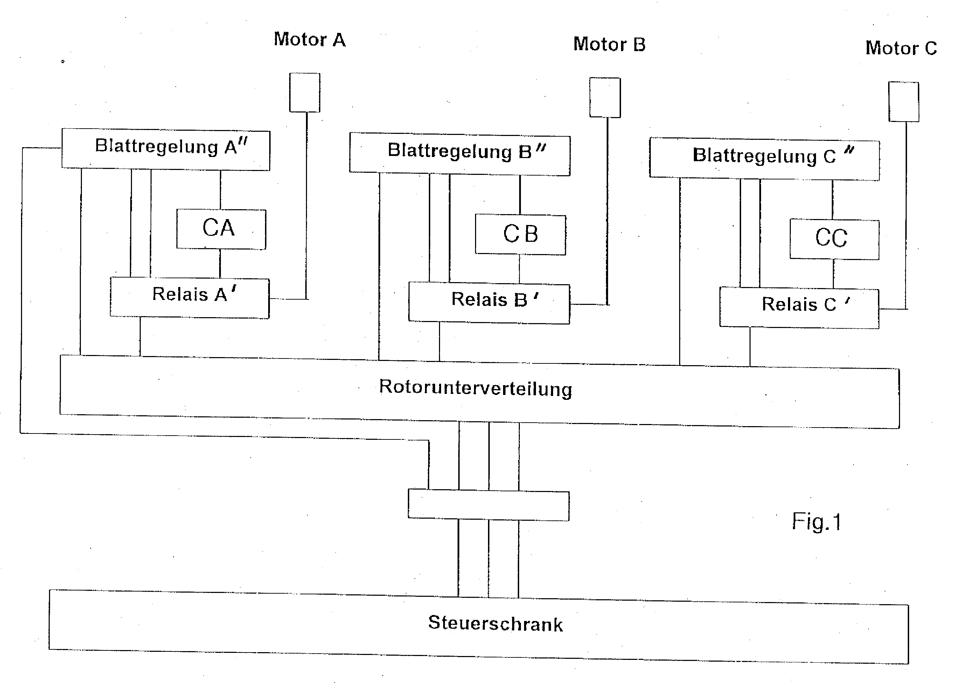

Fig. 1 zeigt das Prinzip-Bild der Rotorblattverstellung einer Windenergieanlage. Da der Rotor der Windenergieanlage über drei Rotorblätter verfügt und jedes einzelne Rotorblatt auf einen gewünschten Anstellwinkel eingestellt (eingeregelt) werden kann, ist für jedes einzelne Rotorblatt ein Verstellmotor A, B oder C vorgesehen, welcher über ein Relais A', B' oder C' angesteuert wird. Die Blattregelungseinrichtung A", B" oder C" erhält von einer Steuereinrichtung (Steuerschrank) ihre Werte und muss im Fall einer Notabschaltung, beispielsweise verursacht durch einen Kurzschluss in der Windenergieanlage oder deren Stromversorgungseinrichtung noch eine Blattverstellung vornehmen, so dass die jeweiligen Rotorblätter des Rotors aus dem Wind "gedreht" werden, d.h. dass sie keinen Antrieb mehr auf den Rotor erzeugen. Die hierfür benötigte Energie wird durch die Kondensatoren CA, CB und CC bereitgestellt. Zum Laden dieser Kondensatoren im Normalbetrieb sind diese mit einem Anschluss (nicht dargestellt) versehen, so dass die (aufgeladenen) Kondensatoren stets ausreichend Energie bereitstellen, um die Rotorblätter auf einen gewünschten Anstellwinkel einzustellen, falls dieses notwendig ist. Da die Kondensatoren in ihren Ausführungen sehr klein sind, können sie unmittelbar an den Verstellmotoren positioniert werden und auch von diesen gehalten werden. Es ist aber auch möglich, alle Kondensatoren zusammen in einer eigenen Aufnahme zu positionieren und im Bedarfsfall als Notstromversorgungseinrichtung für die Rotorblattbestellung oder für andere Teile der Windenergieanlage (z.B. Alarmbeleuchtung, Gefahrenfeuer) im Bedarfsfall zuzuschalten.

Es ist vorteilhaft, statt eines einzelnen Kondensators mehrere Kondensatoren in Parallelschaltung vorzusehen, so dass stets eine ausreichende Notstromkapazität zur Verfügung gestellt werden kann.

## Patentansprüche

1. Verwendung eines Kondensatorspeichers als Speicher für elektrische Energie anstelle eines Akkumulators in einer Windenergienanlage.

2. Verwendung eines Kondensatorspeichers als Notstromversorgungseinheit einer Windenergieanlage, wobei mittels der Notstromversorgungseinheit ein einzelnes Rotorblatt der Windenergieanlage oder mehrere Rotorblätter der Windenergieanlage verstellt werden können.

3. Verwendung eines Kondensatorspeichers als Notstromversorgungseinrichtung für Teile einer Windenergieanlage.

4. Notstromversorgungseinheit einer Windenergieanlage unter Verwendung eines Kondensatorspeichers, wobei mittels der Notstromversorgungseinheit ein einzelnes Rotorblatt der Windenergieanlage oder mehrere Rotorblätter der Windenergieanlage verstellbar sind, wobei für ein Rotorblatt ein Verstellmotor (a, b, c) vorgesehen ist und der Kondensatorspeicher (ca, cb, cc) während des Normalbetriebs der Windenergieanlage aufgeladen wird und am Verstellmotor eines Rotorblatts positioniert ist und der Kondensatorspeicher mit einer Einrichtung zur Regelung der Blattverstellung des Rotorblatts gekoppelt ist.
